Europäisches Patentamt

European Patent Office

Office européen des brevets

(19)

(11) **EP 1 124 119 B1**

(12) **FASCICULE DE BREVET EUROPEEN**

(45) Date de publication et mention
de la délivrance du brevet:
**11.10.2006 Bulletin 2006/41**

(51) Int Cl.:
***G01G 5/00*** *(2006.01)*

(21) Numéro de dépôt: **01400315.6**

(22) Date de dépôt: **08.02.2001**

(54) **Dispositif de pesée pneumatique**

Pneumatische Wägeeinrichtung

Pneumatic weighing device

(84) Etats contractants désignés:
**DE GB**

(30) Priorité: **11.02.2000 FR 0001727**

(43) Date de publication de la demande:
**16.08.2001 Bulletin 2001/33**

(73) Titulaire: **COMPAGNIE GENERALE DES
MATIERES NUCLEAIRES**
**78140 Velizy Villacoublay (FR)**

(72) Inventeurs:
• **Gallard, Paul**
  **50110 Cherbourg (FR)**

• **Decool, François**
  **14400 Bayeux (FR)**

(74) Mandataire: **Ilgart, Jean-Christophe**
**c/o Brevatome,**
**3, rue du Docteur Lancereaux**
**75008 Paris (FR)**

(56) Documents cités:
**GB-A- 1 176 826     US-A- 2 954 221**
**US-A- 2 998 089**

## Description

Un dispositif de pesée pneumatique est le sujet de cette invention.

Les dispositifs de pesée usuels comprennent des mécanismes délicats susceptibles de se dérégler ou d'être endommagés pendant l'exploitation ou les opérations d'entretien, ce qui les rend inadaptés à certaines situations, notamment dans les enceintes étanches, isolées de l'extérieur, où on ne peut travailler que par des appareils de télémanipulations peu adroits : et certaines atmosphères, corrosives, humides, très chaudes ou chargées de rayonnement peuvent rendre les conditions de service encore plus difficiles.

C'est pourquoi on a conçu un dispositif de pesée entièrement dépourvu de mécanismes et où seule la force d'expansion d'un gaz comprimé est exploitée pour fournir l'énergie nécessaire au fonctionnement et pour mesurer le poids de l'objet pesé. Un tel dispositif n'exige normalement aucun réglage sur place ni aucun entretien, et il est conçu pour bien résister aux chocs produits en posant l'objet à peser. De plus, l'opération est faite à partir d'une pesée réelle (celle du plateau à vide), ce qui permet de vérifier en permanence le bon fonctionnement de l'appareil. Le débit de gaz comprimé assure le nettoyage, la protection anticorrosion et le refroidissement de l'appareil.

Le dispositif se distingue de balances pneumatiques antérieures, dont la structure est classique mais qui sont munies d'un capteur pneumatique pour mesurer le déplacement d'un corps d'épreuve sous le poids de l'objet pesé, car le gaz comprimé n'y est utilisé que pour la mesure. Il s'agit d'ailleurs de balances anciennes, les capteurs de déplacement pneumatiques ayant maintenant été remplacés par des capteurs d'une autre nature.

Le gaz utilisé pour le pesage sert ici à produire une sustentation du plateau sur lequel l'objet est posé en créant un coussin d'air sans corps d'épreuve ; mais comme un tel système est particulièrement instable, des dispositions supplémentaires doivent être prises pour assurer le maintien de l'équilibre du plateau, en s'opposant à la fois à ses déplacements latéraux, à sa rotation ainsi qu'à des mouvements de basculement que produirait un objet qui serait posé sur lui avec un excentrement, et sans jamais permettre de frottement entre le plateau et le socle fixe du dispositif, ce qui nuirait à la justesse de la mesure.

Une autre balance pneumatique ancienne, conforme au préambule de la première revendication, est divulguée dans le document US-A-2 954 221. De l'air comprimé originaire d'un conduit traversant le socle emplit une cavité délimitée par un socle immobile, un plateau sur lequel l'objet à peser est posé et un rebord déformable joignant le socle au plateau. La cavité est close si ce n'est que des ouvertures traversent le rebord. Quand un objet est posé sur le plateau, le socle est comprimé, le plateau s'abaisse et diminue un espace de fuite où l'air comprimé entre dans la cavité entre le socle et le plateau : l'écoulement est contrarié et la pression monte dans le conduit, de sorte qu'on peut la corréler au poids de l'objet. Les caractéristiques du rebord influent toutefois sur la mesure et la compliquent, d'autant plus qu'elles peuvent varier avec le temps. La précision de la mesure peut être mise en doute.

Le document US-A- 2 998 089 est similaire au précédent si ce n'est que le rebord est remplacé par des blocs compressibles isolés, composant des appuis sur lesquels le plateau est posé. Ici encore un étranglement d'un conduit de fuite d'air produit par le poids de l'objet et le déplacement du plateau engendre une élévation de pression dans le conduit et indique par corrélation le poids de l'objet.

Un dispositif de pesée pneumatique satisfaisant et conforme à la définition la plus générale de l'invention comprend encore un socle, un plateau à rebord entourant le socle, un système de soufflage de gaz à pression constante finissant en un conduit, utilisé pour la pesée, vertical et débouchant sous le plateau. Toutefois, le plateau est posé sur le socle et le dispositif de soufflage comprend aussi d'autres des conduits, qui sont latéraux, et débouchent par des bassins devant le rebord du plateau. Les coussins de gaz ainsi formés entre le socle et le plateau par le gaz soufflé assurent son centrage par rapport au socle. Le dispositif comprend encore un moyen de mesure d'une grandeur corrélée (auparavant) avec le poids d'un objet posé sur le plateau.

La pression du gaz qui règne au niveau du coussin situé à l'extrémité du conduit vertical fait équilibre au poids du plateau et de l'objet placé dessus. Cette pression est une fonction croissante du poids de l'ensemble.

La pression est facile à mesurer à condition d'installer une prise de pression dans ce conduit et d'installer un capteur de pression, même à un endroit éloigné. Les conduits latéraux ont pour but de centrer le plateau par rapport au socle en supprimant toute possibilité de frottement. La stabilité du plateau contre le basculement est meilleure si on dispose N conduits verticaux semblables aux précédents, de préférence disposés au sommet d'un polygone régulier de même centre que le plateau. Une prise de pression peut alors être installée sur chaque conduit vertical, et la somme des N mesures après traitement des signaux donne le poids de l'objet.

En première approximation, cette fonction peut être présentée comme suit:

$$(M + m)g = nS \sum_{i=1}^{i=n} Pi,$$

où
M = Masse de plateau
m = Masse de l'objet
n = Nombre de bassin
S = Surface d'un bassin

Pi = Pression régnant dans ième bassin.

On peut aussi se prémunir contre les mouvements de rotation du plateau, dans le cas fréquent où celui-ci est circulaire comme le rebord et le socle : le socle et le rebord sont alors façonnés avec une rainure verticale et une clavette engagée dans la rainure, en laissant subsister deux jeux devant des faces latérales opposées de la clavette, et le système de soufflage de gaz comprend aussi deux conduits latéraux aboutissant respectivement dans les jeux dans des directions opposées. La clavette coulisse librement dans la rainure du plateau sans contact avec celui-ci.

Une réalisation préférée de l'invention sera maintenant décrite à l'aide des figures suivantes :

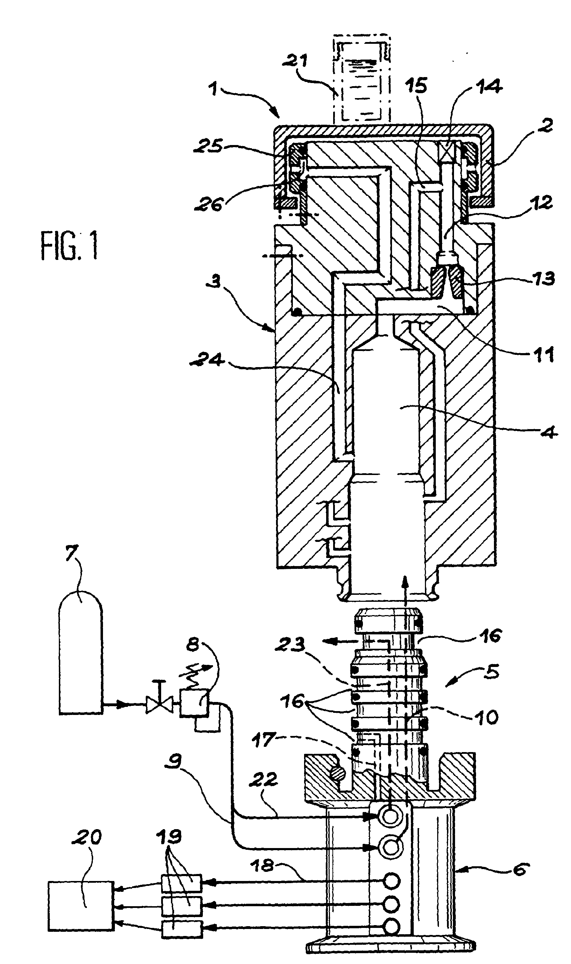

- la figure 1 est une vue générale de l'invention ;

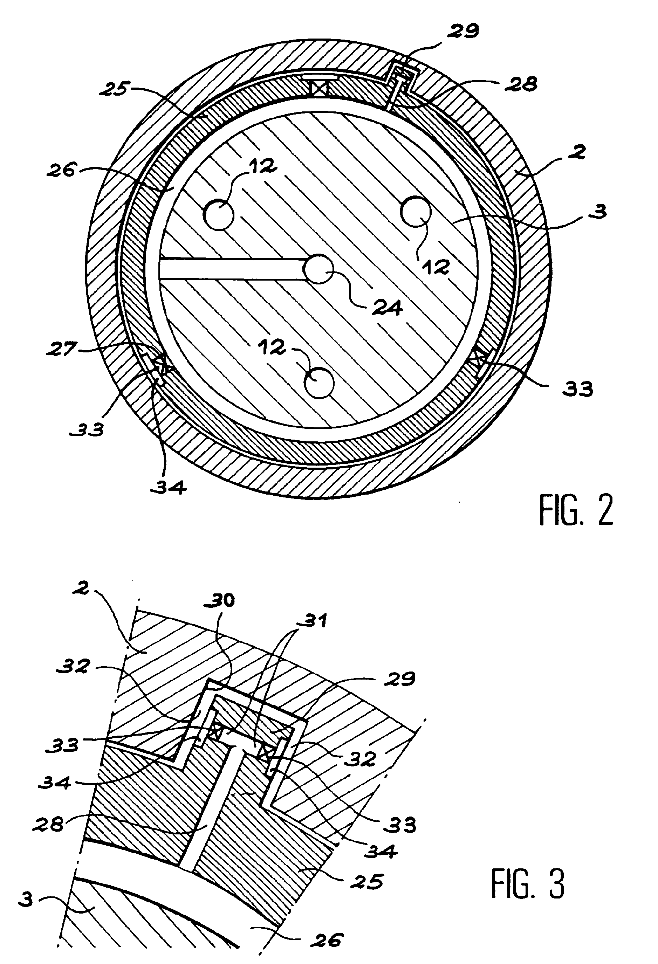

- la figure 2 est une coupe horizontale de la partie supérieure de la balance ;
- et la figure 3 est un détail de la figure 2.

La balance pneumatique est donc composée de deux éléments principaux, sans contact pendant le fonctionnement : un plateau 1 circulaire et plat, muni à sa périphérie d'un rebord 2 descendant, et un socle 3. Le plateau 1 est posé au repos sur le socle 3, et le rebord 2 l'entoure. Le socle 3 est traversé d'un certain nombre de conduits de soufflage du gaz nécessaire à l'invention, et son fond est creusé d'une chambre 4 dans laquelle un connecteur pneumatique 5 est enfoncé en temps normal (il est représenté extrait ici pour des raisons de clarté). Le culot 6 du connecteur pneumatique 5 reste cependant toujours exposé et reçoit les canalisations de gaz menant aux appareils d'alimentation et de mesure. C'est ainsi qu'on trouve une source de gaz comprimé 7, munie d'un régulateur 8 pour produire une pression constante de gaz, et dont une canalisation de sortie 9 aboutit à un perçage 10 central dans le connecteur 5, qui débouche dans le fond de la chambre 4 et se prolonge par un réseau distributeur 11 aboutissant à des conduits verticaux 12, ici au nombre de trois et disposés en triangle équilatéral dans le sommet du socle 3, jusqu'à déboucher sous le plateau 1. Chacun des conduits verticaux 12 comprend un gicleur 13 à l'entrée et un bassin 14 à la sortie. Le bassin 14 est une buse conçue pour assurer la sustentation du plateau 1, c'est-à-dire pour former un coussin de gaz. Un conduit 15 de prise de pression débouche dans chacun des conduits verticaux 12 entre le gicleur 13 et le bassin 14 ; il se prolonge à travers le socle 3 jusqu'à une gorge 16 respective du connecteur 5, puis communique à un conduit 17 ménagé à travers le connecteur 5 et une canalisation 18 extérieure menant à un capteur de pression 19. La pression mesurée par chacun des capteurs 19 est transmise à un calculateur 20 électronique qui effectue la somme de ces mesures de pression.

La pression régnant dans les conduits verticaux 12 dépend en effet du poids total du plateau 1 et d'un objet 21 à peser qui est posé sur lui. Un étalonnage préliminaire ayant été entrepris avant d'utiliser effectivement le dispositif, la différence de pression mesurée par les capteurs 19 peut être corrélée directement au poids de l'objet 21. L'objet 21 peut typiquement être un cruchon hermétiquement clos contenant du liquide dangereux et qu'un appareil de manipulation non représenté lâche sur le plateau 1 avant de le reprendre pour l'emporter vers une installation de mesure, de conditionnement ou autre selon l'industrie dans laquelle la balance est employée. La séparation du plateau 1 et du socle 3 permet d'accepter que le manipulateur dépose l'objet 21 en heurtant le plateau 1 ou au contraire en le laissant tomber d'une certaine hauteur sans produire de dégât, et la mesure n'est pas sensiblement affectée si l'objet 1 est posé à l'écart du centre du plateau 1 car la pression régnant dans chaque coussin 14 est représentative de la charge supportée par lui.

Dans le cas où l'objet à peser se trouve en dehors du triangle formé par les trois coussins 14, le plateau bascule en s'appuyant sur le ou les coussins 14 les plus proches de l'objet à peser. Le ou les coussins 14 situés à l'opposé donnent alors une pesée négative. La somme de l'ensemble donne toujours le poids de l'objet à peser mais avec une précision moindre.

Une autre canalisation 22 extérieure, provenant de la source de gaz 7, aboutit au connecteur 5, dans un conduit 23 creusé dans celui-ci, et de là dans une dernière gorge 16 de raccordement à un conduit 24 creusé dans le socle 3. Le conduit 24 aboutit devant une bague 25 établie au sommet du socle 3 et qu'entoure le rebord 2 avec un peu de jeu ; elle comprend une gorge 26 sur sa face intérieure, dans laquelle débouche le conduit 24. Trois conduits latéraux 27 à 120° traversent radialement la bague 25 à partir de la gorge 26 et permettent d'alimenter en air trois gicleurs. Les trois coussins d'air ainsi créés sur le rebord intérieur du plateau 1 permettent de centrer sans frottement celui-ci sur son socle 3. De plus, un perçage supplémentaire 28 s'étend de la même façon jusque dans une clavette verticale 29 de la bague 25, qui s'étend dans une rainure 30 de forme correspondante du rebord 2, cependant plus large que la clavette 29 pour laisser subsister un jeu 32 suffisant de part et d'autre avec elle. Le conduit 28 bifurque en deux branches 31 opposées qui chacune alimente en gaz un gicleur 33 débouchant sur un bassin 34 permettant de créer un coussin de gaz entre la clavette 29 et la rainure 30 du plateau 1: cette disposition bloque la rotation du plateau 1 sans frottement avec le corps 3.

On constate que la grande simplicité de structure de cette balance permet de la nettoyer ou de la décontaminer sans inquiétude pour son intégrité et avec une grande facilité ; il suffit éventuellement d'ôter le plateau 1 pour accéder à toutes ses faces, bien qu'il n'y ait pas de raison que des impuretés puissent s'introduire sous le plateau 1 en raison de la protection offerte par le rebord 2 et du débit de gaz permanent.

**Revendications**

1. Dispositif de pesée pneumatique, comprenant un socle (3), un plateau (1) à rebord (2) entourant le socle (3), un système de soufflage de gaz à pression déterminée finissant en un conduit (12) vertical traversant le socle et débouchant sous le plateau (1), un moyen de mesure (19, 20) d'une grandeur corrélée avec le poids d'un objet (21) posé sur le plateau, **caractérisé en ce que** le plateau est posé sur le socle (3), le système de soufflage de gaz finit encore en d'autres conduits traversant le socle (3) (27) qui sont latéraux, divergents et débouchant devant le rebord, et un coussin de gaz est formé entre le socle et le plateau par la pression du gaz soufflé.

2. Dispositif de pesée pneumatique selon la revendication 1, dans lequel la grandeur mesurée est une pression régnant dans le conduit vertical (12).

3. Dispositif de pesée pneumatique selon la revendication 1, comprenant deux ou plusieurs autres conduits verticaux (12) débouchant sous le plateau, les conduits verticaux débouchant à des endroits correspondant aux sommets d'un polygone régulier.

4. Dispositif de pesée pneumatique selon les revendications 2 et 3, comprenant des perçages (15) de prise de pression aboutissant aux conduits verticaux (12), les moyens de mesure consistant en des capteurs de pression respectivement associés aux perçages et aux conduits verticaux, et un moyen de calcul additionnant les mesures.

5. Dispositif de pesée automatique selon l'une quelconque des revendications 1 à 4, comprenant trois conduits latéraux (12), le plateau (1) et le rebord (2) étant circulaires.

6. Dispositif de pesée pneumatique selon la revendication 5, dans lequel les conduits latéraux (27) sont creusés à travers une bague (25) et débouchent dans une gorge de distribution (26) de gaz creusée dans une face interne de la bague.

7. Dispositif de pesée pneumatique selon l'une quelconque des revendications 1 à 6, dans lequel le socle, le plateau et le rebord sont circulaires, hormis un endroit où le socle (3) et le rebord (2) sont façonnés en rainure verticale (30) et en clavette (27) engagée dans la rainure en laissant subsister deux jeux (32) devant des faces latérales opposées de la clavette, et le système de soufflage de gaz comprend aussi deux conduits latéraux (31) aboutissant respectivement dans les jeux et orientés dans des directions opposées.

**Claims**

1. Pneumatic weighing device comprising a base (3), a tray (1) having a flange (2) surrounding the base (3), a system for blowing air at a set pressure ended up in a vertical pipe (12) traversing the base and issuing beneath the tray (1), a means (19, 20) for measuring a magnitude correlated with the weight of an object (21) placed on the tray, **characterized in that** the tray is placed on the base (3), the gas blowing system again ending up in other lateral, divergent pipes (27) issuing in front of the flange and traversing the base (3), and a gas cushion is formed between the base and the tray by the pressure of the blown gas.

2. Pneumatic weighing device according to claim 1, wherein the magnitude measured is a pressure prevailing in the vertical pipe (12).

3. Pneumatic weighing device according to claim 1, comprising two or more other vertical pipes (12) emerging under the tray, the vertical pipes emerging in places corresponding to the apexes of a regular polygon.

4. Pneumatic weighing device according to claims 2 and 3, comprising pressure inlet bores (15) leading to the vertical pipes (12), the measurement means consisting of pressure sensors in association respectively with the bores and with the vertical pipes, and a calculation means adding up the measurements.

5. Pneumatic weighing device according to any one of claims 1 to 4, comprising three lateral pipes (12), the tray (1) and the flange (2) being circular.

6. Pneumatic weighing device according to claim 5, wherein the lateral pipes (27) are hollowed out through a collar (25) and emerge in a gas distribution neck (26) hollowed out in an inner face of the collar.

7. Pneumatic weighing device according to any one of the claims 1 to 6, wherein the base, the tray and the flange are circular, except for a place where the base (3) and the flange (2) are shaped into a vertical groove (30) and a pin (27) engaged in the groove leaving two clearances (32) facing opposite lateral sides of the pin, and the gas blowing system also includes two lateral pipes (31) ending respectively in the clearances and oriented in opposite directions.

**Patentansprüche**

1. Pneumatische Wägevorrichtung, umfassend einen Sockel (3), ein Plateau (1) mit einem umgebogenen Rand (2) um den Sockel (3) herum, ein Gasblassystem mit festgelegtem Druck, das in einer vertikalen Leitung (12) endet, die den Sockel durchquert und unter dem Plateau (1) mündet, eine Messeinrichtung (19, 20) einer Größe in Korrelation mit dem Gewicht eines auf dem Plateau abgestellten Gegenstands (21),

**dadurch gekennzeichnet, dass** das Plateau auf dem Sockel (3) sitzt, das Gasblassystem auch noch in anderen den Sockel (3) durchquerenden, seitlichen, divergierenden und vor dem umgebogenen Rand mündenden Leitungen (27) endet, und sich durch den Druck des geblasenen Gases zwischen dem Sockel und dem Plateau ein Gaskissen bildet.

2. Pneumatische Wägevorrichtung nach Anspruch 1, bei der die gemessene Größe ein in der vertikalen Leitung (12) herrschender Druck ist.

3. Pneumatische Wägevorrichtung nach Anspruch 1, zwei oder mehrere weitere vertikale, unter dem Plateau mündende Leitungen (12) umfassend, wobei die vertikalen Leitungen an Stellen münden, die den Spitzen eines gleichmäßigen Vielecks entsprechen.

4. Pneumatische Wägevorrichtung nach den Ansprüchen 2 und 3, in den vertikalen Leitungen (12) endende Druckorfassungsbohrungen (15) - wobei die Messeinrichtungen durch jeweils den Bohrungen und den vertikalen Leitungen zugeordnete Drucksensoren gebildet werden - und eine die Messungen addierende Recheneinrichtung umfassend.

5. Pneumatische Wägevorrichtung nach einem der Ansprüche 1 bis 4, drei seitliche Leitungen (12) umfassend, wobei das Plateau (1) und der umgebogene Rand (2) kreisförmig sind.

6. Pneumatische Wägevorrichtung nach Anspruch 5, bei der die seitlichen Leitungen (27) einen Ring (25) durchqueren und in einer in eine Innenfläche des Rings eingearbeitete Gasverteüungsrillo bzw. -kehle (26) münden.

7. Pneumatische Wägevorrichtung nach einem der Ansprüche 1 bis 6, bei der der Sockel, das Plateau und der umgebogene Rand kreisförmig sind, mit Ausnahme einer Stelle, wo der Sockel (3) und der umgebogene Rand (2) die Form einer vertikalen Nut (30) sowie eines Keils (29) aufweisen, der so in der Nut steckt, dass vor entgegengesetzten Seitenflächen des Keils zwei Spiele (32) vorhanden sind, und das Gasblassystem auch zwei Seitenleitungen (31) umfasst, die jeweils in den Spielen enden und in entgegengesetzte Richtungen orientiert sind.

FIG. 1

FIG. 2

FIG. 3